# DEMANDE DE BREVET EUROPEEN

(11) **EP 3 028 996 A1**
(43) Date de publication de la demande: **08.06.2016**
(21) Numéro de dépôt: 15306652.7
(22) Date de dépôt: 15.10.2015
(51) Int. Cl.: C02F 1/76, C02F 1/66

(54) **UTILISATION DU COUPLAGE HYPOCHLORITES/CO2 POUR AMÉLIORER LA DÉSINFECTION DE L'EAU CIRCULANT DANS LES TOURS DE REFROIDISSEMENT**

(30) Priorité: 02.12.2014 FR 1461805
(71) Demandeur: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: Campo, Philippe, 78180 Montigny Le Bretonneux (FR); Alban, Bruno, 91300 Massy (FR); Bras, Dominique, 78350 Jouy en Josas (FR); Beaudouin, Guillaume, 78190 Trappes (FR)
(74) Mandataire: Mellul-Bendelac, Sylvie Lisette

(57) **Abrégé**

Un procédé de désinfection de l'eau circulant dans une tour de refroidissement, procédé du type comportant une mise en contact de l'eau avec un agent de désinfection chloré ou bromé ou bromé, se caractérisant en ce que :
- on procède à l'injection de CO₂ gazeux dans l'eau ;
- on ne procède à aucun ajout d'acide dans l'eau.

## Description

La présente invention concerne le domaine des tours aéroréfrigérantes, aussi appelées « tours de refroidissement », qui sont utilisées pour refroidir un liquide, généralement de l'eau, à l'aide d'un gaz, généralement l'air ambiant.

Les tours de refroidissement sont des équipements courants, présents dans des installations de climatisation, ou dans des procédés industriels et énergétiques telles les centrales électriques, elles ont pour fonction d'évacuer vers l'extérieur la chaleur issue de telles installations ou procédés.

On voit donc que ces tours aéroréfrigérantes sont destinées à refroidir des eaux qui ont été réchauffées par une source d'énergie, par exemple par le condenseur présent dans des installations frigorifiques.

On peut rappeler que la construction la plus fréquente de telles tours a la forme d'un hyperboloïde à une nappe : l'eau à refroidir est amenée par une conduite en haut de la tour, eau qui, à partir de cette arrivée, est dispersée à l'aide d'un réseau de rampes percées, puis tombe par écoulement gravitaire sur un garnissage réalisant une grande surface de contact entre le liquide et l'air. Un flux d'air circule à contre courant. Une partie de l'eau va s'évaporer, ce qui provoque l'abaissement de sa température.

Parmi les différents types d'installations existantes on trouve des échangeurs ouverts, où l'eau chaude (dont la température dépend des équipements à refroidir, généralement 25-40 C) tombe par gravitation à l'intérieur d'un flux d'air frais remontant dans la tour.

L'eau refroidie est collectée dans un bassin de rétention en partie basse de la tour avant de retourner vers l'échangeur ou le procédé à refroidir.

Un débit d'eau d'appoint sur les tours permet généralement de compenser la perte intervenant par évaporation ainsi que le débit de purge des circuits.

Parmi les risques liés on trouve le fait bien connu que les gouttelettes peuvent transporter des micro-organismes ayant proliféré dans la tour, et notamment des *Legionelles*, ce qui nécessite de mettre en place des actions de nettoyage et de désinfection afin de maîtriser le risque de dissémination de tels microorganismes.

Des produits chloré ou bromés de type eau de javel (hypochlorites) sont couramment utilisés à cette fin.

L'ajout de désinfectant chloré ou bromé est traditionnellement effectué :
- soit dans le bain froid en partie basse de la tour;
- soit dans un circuit de circulation de ce bain, de préférence en aval d'une pompe.

Néanmoins l'utilisation de ces hypochlorites se révèle délicate, ceci pour les raisons suivantes : leur utilisation augmente le pH de l'eau dans laquelle ils sont ajoutés, alors que de façon bien connue, l'efficacité des hypochlorites est beaucoup plus importante à pH neutre ou très légèrement acide. Ceci rend en pratique nécessaire, dans ce domaine technique, de réguler le pH de l'eau, typiquement entre 6,5 et 7, ou à tout le moins d'adapter le pH de travail en trouvant un pH de compromis entre les matériaux présents et le risque de corrosion et d'entartrage et un pH le plus faible possible pour optimiser la désinfection. Pour cela, il est connu d'ajouter un acide pour compenser ce phénomène. Néanmoins, il est bien connu également que l'ajout de tels acides forts (tels que les acides sulfurique ou chlorhydrique) peuvent entrainer la production de chlore Cl₂, très toxique, qui est alors en général en partie libéré dans l'atmosphère. Ceci est d'autant plus marqué que les réactifs javel et acide fort sont concentrés. En conséquence, quel que soit l'intérêt technique d'ajouter de l'acide et de la javel, il est déconseillé de le faire exactement au même endroit.

L'ajout de l'agent chloré ou bromé est surtout utilisé ponctuellement en quantités importantes pour des traitements curatifs. L'ajustement du pH se fait toujours à l'acide fort, qui peut être additionné ici encore dans le bain froid ou dans le circuit de circulation, en général entre le bain froid et l'échangeur.

Les concentrations de chlore libre sont généralement comprises en 0,1 et 3 mg/l, le plus souvent entre 0,2 et 0,5 mg/l pour un traitement préventif et entre 5 et 50 mg/l, le plus souvent entre 8 et 30 mg/l pour un traitement curatif.

Comme on l'a évoqué ci-dessus, l'intervention d'acides minéraux forts tels que les acides sulfurique ou chlorhydrique présente des inconvénients notables :
- l'ajustement précis est délicat à réaliser. En effet, l'ajout progressif de l'acide provoque une chute très marquée du pH aux alentours de 7 ce qui rend l'arrêt de l'ajout difficile à maîtriser.
- par ailleurs ces acides forts sont très corrosifs et donc très délicats à manipuler. Les sels résultants de ces acides peuvent avoir une action de corrosion sur les matériaux où circule l'eau traitée. Ces sels d'acides forts peuvent également avoir une action néfaste sur l'environnement lors du rejet de l'eau. Leur concentration dans les rejets est parfois réglementée localement.
- Ils peuvent provoquer l'émanation très rapide de chlore gazeux (qui est un gaz mortel) dés un pH inférieur à 5.

La présente invention vise à apporter une solution technique aux problèmes ci-dessus exposés, en permettant notamment :
- d'éviter les inconvénients liés à la présence des acides de l'art antérieur ;
- de maintenir d'excellentes performances de désinfection voire d'améliorer ces performances.

Comme on le verra plus en détails dans ce qui suit, les travaux menés à bien par la Demanderesse ont permis de démontrer qu'il était possible d'atteindre de tels objectifs par la mise en oeuvre concomitante ou successive à l'ajout du désinfectant chloré ou bromé (ou bromé), de CO₂ gazeux, ceci en pouvant se passer de l'intervention d'un acide dans le procédé. Ces travaux ont en effet permis de démontrer que le CO₂ améliore l'efficacité du désinfectant, dans un véritable couplage entre le CO₂ et le désinfectant, ceci malgré l'absence de l'acide.

On peut résumer les avantages de ce couplage de la façon suivante :
- on accroit le pouvoir désinfectant du désinfectant en favorisant la présence d'acide hypochloreux HClO qui est plus oxydant/désinfectant que l'hypochlorite de sodium
- On accroit le pouvoir de pénétration des désinfectants dans les éventuels dépôts (tartre, biofilm) du fait de la concentration en CO₂ dissous qui peut être très nettement supérieur pour un même pH à ce qui est observé dans le cas de l'utilisation d'un acide fort.
- on optimise le coût global du traitement par le fait que l'on augmente le pouvoir de désinfection : pour un même ajout d'hypochlorite on réduit d'un log la flore totale.
- on améliore la sécurisation de l'ensemble de l'installation : par l'absence d'acide, par l'élimination du risque de formation de chlore gazeux, par la diminution des phénomènes de corrosion, par l'amélioration des questions de rejet de sous produits formés par des ajouts massifs d'hypochlorite et d'acides forts.
- l'ajout de CO₂ est par ailleurs connu dans le cas des eaux de refroidissement mais uniquement pour assurer l'équilibre calco-carbonique i.e pour maîtriser le dépôt éventuel de tartre dans l'installation, l'ajout de CO₂ pour optimiser le pouvoir désinfectant de l'hypochlorite selon l'invention permet alors de maîtriser simultanément les phénomènes de tartre.

La présente invention concerne alors un procédé de désinfection de l'eau circulant dans une tour de refroidissement, procédé du type comportant une mise en contact de l'eau avec un agent de désinfection chloré ou broméchloré ou bromé ou bromé, se caractérisant en ce que :
- on procède à l'injection de CO₂ gazeux dans l'eau ;
- on ne procède à aucun ajout d'acide dans l'eau.

On le sait le CO₂ est considéré comme un diacide faible, donc comme on l'aura compris à la lecture de ce qui précède l'invention réside dans le fait qu'en dehors de l'ajout de CO₂ gazeux, il n'est procédé à aucun ajout d'acide de quelque sorte que ce soit, ni les acides forts bien connus de ce domaine (sulfurique ou chlorhydrique) ni d'autres catégories.

L'invention pourra par ailleurs adopter l'une ou plusieurs des caractéristiques techniques suivantes :
- le CO₂ gazeux est injecté dans un bain de l'eau ainsi refroidie (en partie basse de la tour).
- le CO₂ gazeux est injecté dans un circuit de recirculation de l'eau ainsi refroidie (de façon préférentielle en aval de la pompe de reprise et avant l'échangeur).
- le CO₂ gazeux et l'agent de désinfection chloré ou broméchloré ou bromé ou bromé sont injectés au même endroit du procédé.
- on procède à l'ajout de l'agent chloré ou bromédésinfectant en une seule fois et l'on régule le pH par l'action sur les ajouts du CO₂ gazeux.
- on procède à l'ajout de l'agent chloré ou broméchloré ou bromé ou bromé et du CO₂ gazeux en continu avec une régulation du pH de la solution par une mesure de ce pH et une rétroaction sur le débit d'arrivée du CO₂ gazeux, et également, le cas échéant, sur le débit d'arrivée de l'agent chloré ou broméchloré ou bromé ou bromé .
- on procède à l'ajout de CO₂ gazeux dans un circuit de recirculation de l'eau ainsi refroidie en partie basse de la tour sous la forme d'une quantité de CO₂ fixe pour un débit d'eau recirculée donné.
- on procède de plus à l'ajout de CO₂ gazeux dans une eau d'appoint sous la forme d'une quantité de CO₂ fixe pour un débit d'eau d'appoint donné.
- on procède de plus à un ajout d'agent chloré ou broméchloré ou bromé ou bromé dans une eau d'appoint.

On illustre dans ce qui suit les résultats obtenus grâce à l'invention, résultats obtenus dans les conditions opératoires suivantes :
- L'invention telle que décrite a été développée sur un site industriel de grande taille qui utilise de nombreuses tours de refroidissement.

L'alimentation en eau se fait à partir d'une rivière proche après dégrillage et filtration. Le débit d'eau d'appoint sur les tours permet de compenser la perte par évaporation dans les tours de refroidissement ainsi que le débit de purge/déconcentration des circuits. De l'eau de javel est ajoutée de façon préventive donc continue dans l'eau d'appoint, le pH comme expliqué plus haut a tendance à augmenter avec le temps. On maintient en général dans l'eau d'appoint de 1 à 2 mg/l d'hypochlorite. Aussi, cette augmentation du pH avec le temps qui nuit à l'équilibre calco-carbonique (favorisant les dépôts de calcaire) est compensée par l'ajout d'acide sulfurique (pH à maintenir inférieur à 9). Lorsque la qualité de l'eau de refroidissement ne convient pas, un traitement curatif ou dit « de choc » est réalisé en ajoutant une quantité importante d'eau de javel en une fois dans le bain froid.
- Une tour d'expérimentation sur l'ensemble a donc été modifiée selon l'invention pour démontrer l'intérêt de la solution. Pour ce faire, du CO₂ est ajouté dans le circuit de recirculation, en ligne, donc en maximisant le transfert de matière pour maximiser la quantité de CO₂ dissoute (technologie d'injection choisie, dimensionnée et vitesse de l'eau supérieure à 1 m/s). L'ajout d'acide fort a été stoppé et l'ajout d'eau de javel maintenu. Malgré la perte de CO₂ dans la tour de refroidissement due à l'évaporation de l'eau, le pH de l'ensemble peut être abaissé pour garantir des conditions optimales de désinfection et limiter également le risque de dépôt de tartre.
- Sans descendre, pour des raisons de compatibilité des matériaux et économique à un pH optimal compris entre 6,5 et 7,0 ; la mise à pH 8 de l'installation a permis de favoriser la présence d'acide hypochloreux lors de l'ajout d'hypochlorite de sodium. En conséquence, pour une même quantité de désinfectant ajoutée il a été observé une augmentation de la désinfection, d'un ordre de grandeur en échelle logarithmique sur la flore totale.

En résumé, les inconvénients de l'art antérieur évités ou améliorés sont les suivants :
- l'impossibilité de produire du chlore gazeux quel que soit le mode d'introduction du CO₂ et de l'eau de javel (arrêt de l'acide fort) et ce, que le traitement soit préventif ou curatif.
- l'élimination des risques inhérents à la manipulation des acides forts (corrosifs).
- un dépôt de calcaire très limité (le CO₂ est un diacide faible).
- l'ajout maîtrisé du CO₂ (débit ajouté corrélé au pH mesuré) avec efficacité de transfert maximisée (mode d'injection, vitesse moyenne de l'eau supérieure à 1 m/s), limitée à la quantité perdue dans la tour du fait que la quantité injectée correspond au pH visé (pas de surdose possible comme ce qui est couramment observé pour les acides forts du fait de la nature du CO₂ qui est un diacide faible).
- une meilleure efficacité de désinfection, due entre autre à une pénétration plus aisée du désinfectant dans les dépôts présents dans l'installation, du fait de la fragilisation de ces derniers par l'augmentation de la concentration en CO₂ dissous dans l'eau.

## Revendications

1. Procédé de désinfection de l'eau circulant dans une tour de refroidissement, procédé du type comportant une mise en contact de l'eau avec un agent de désinfection chloré ou bromé, **se caractérisant en ce que** :
- on procède à l'injection de CO₂ gazeux dans l'eau ;
- on ne procède à aucun ajout d'acide dans l'eau.

2. Procédé de désinfection selon la revendication 1, **se caractérisant en ce que** le CO₂ gazeux est injecté dans un bain de l'eau ainsi refroidie en partie basse de la tour.

3. Procédé de désinfection selon la revendication 1, **se caractérisant en ce que** le CO₂ gazeux est injecté dans un circuit de recirculation de l'eau ainsi refroidie en partie basse de la tour, de façon préférentielle en aval d'une pompe de reprise et avant un échangeur mis en oeuvre dans l'opération de refroidissement.

4. Procédé de désinfection selon l'une des revendications précédentes, **se caractérisant en ce que** le CO₂ gazeux et l'agent de désinfection sont injectés au même endroit du procédé.

5. Procédé de désinfection selon l'une des revendications précédentes, **se caractérisant en ce que** l'on procède à l'ajout de l'agent de désinfection en une seule fois et l'on régule le pH par l'action sur les ajouts du CO₂ gazeux.

6. Procédé de désinfection selon l'une des revendications 1 à 4, **se caractérisant en ce que** l'on procède à l'ajout de l'agent de désinfection et du CO₂ gazeux en continu avec une régulation du pH de la solution par une mesure de ce pH et une rétroaction sur le débit d'arrivée du CO₂ gazeux, et également, le cas échéant, sur le débit d'arrivée de l'agent de désinfection.

7. Procédé de désinfection selon l'une des revendications 1 à 4, **se caractérisant en ce que** l'on procède à l'ajout de CO₂ gazeux dans un circuit de recirculation de l'eau ainsi refroidie en partie basse de la tour sous la forme d'une quantité de CO₂ fixe pour un débit d'eau recirculée donné.

8. Procédé de désinfection selon l'une des revendications précédentes, **se caractérisant en ce que** l'on procède de plus à l'ajout de CO₂ gazeux dans une eau d'appoint sous la forme d'une quantité de CO₂ fixe pour un débit d'eau d'appoint donné.

9. Procédé de désinfection selon l'une des revendications précédentes, **se caractérisant en ce que** l'on procède de plus à un ajout d'agent de désinfection dans une eau d'appoint.
